# EUROPEAN PATENT SPECIFICATION

(11) **EP 1 670 216 B1**
(45) Date of publication and mention of the grant of the patent: **25.01.2012**
(21) Application number: 04773286.2
(22) Date of filing: 17.09.2004
(51) Int. Cl.: H04M 1/02, H04M 1/00, G06F 1/16, H04M 19/04

(54) **INFORMATION COMMUNICATION TERMINAL**
INFORMATIONS-KOMMUNIKATIONS-ENDGERÄT
TERMINAL DE COMMUNICATION D'INFORMATIONS

(30) Priority: 18.09.2003 JP 2003326617; 19.09.2003 JP 2003328983; 22.09.2003 JP 2003329276
(43) Date of publication of application: 14.06.2006
(73) Proprietor: Vodafone Group PLC, Newbury Berkshire RG14 2FN (GB)
(72) Inventor: INOUE, Mikio, Vodafone K.K., Tokyo 105-6205 (JP)
(74) Representative: Sneary, Adrian Bernard
(86) International application number: PCT/JP2004/013664
(87) International publication number: WO 2005/029821

(56) References cited:
- JP-A- 7 046 556
- JP-A- 7 058 814
- JP-A- 9 327 007
- JP-A- 2000 236 375
- JP-A- 2001 021 992
- JP-A- 2001 189 789
- JP-A- 2001 197 167
- JP-A- 2002 027 060
- JP-A- 2002 077 327
- JP-A- 2002 152 328
- US-B1- 6 614 422

## Description

### Technical Field

The present invention relates to an information communication terminal such as a mobile phone capable of projecting images.

### Background Art

In the past, a mobile phone comprising a display, a projector as image projecting means and control means for controlling the displayed and the projector is well known (refer to Patent Document 1, for example). This mobile phone is configured so as to perform enlarged projection of at least one part of an image to be display on the display, to an external projection screen via the projector. The mobile phone may perform enlarged projection of one part of an image displayed on the display screen to an external projection screen, or enlarged projection of the entire image on the screen to the projection screen.
Patent Document 1: Japanese Unexamined Patent Application Publication No. 2001-21992
JP - 2000-236375 relates to a portable telephone comprising a projector. JP-2001-197167 concerns a portable telephone with functionality for providing a display output to an external display device.

### Disclosure of the Invention

### Problems to be Solved by the Invention

However, the mobile phone described in the Patent Document 1 projects a part of or an entire individual image displayed on the display, and does not project an image utilizing a feature of image projection in which an image is projected onto an external relatively wide projection screen.

The present invention has been accomplished in view of the above-mentioned problem. An object of the present invention is to provide an information communication terminal capable of projecting an image utilizing a feature of image projection.

### Means for Solving the Problem

In order to attain the aforementioned object, an information communication terminal according to the present invention is an information communication terminal comprising image display means for displaying images, image projection means for projecting images onto an external projection screen, and control means for controlling the image projection means: the information communication terminal further comprising data memory means for memorizing data of dedicated images for projection which are different from images displayed by the image display means; wherein the control means controls the image projection means to read out data of the dedicated image for projection from the data memory means when projecting an image, and project the dedicated image for projection.
This information communication terminal controls the image projection means to memorize data of dedicated images for projection which are different from images displayed by image display means, read out data of the dedicated image for projection from the data memory means when projecting images, and project the dedicated image for projection. As mentioned above, without constraint on displaying images by the image display means, a dedicated image for projection which is different from images displayed by the image display means can be projected, so that image projection is allowed utilizing a feature of image projection.

Further, it is preferable that the information communication terminal comprises information receiving means for receiving information via a communication network; and the control means controls the image projection means for projecting an incoming notification image dedicated to projection which can be set up independently from incoming notification images displayed by the image display means, as the dedicated images for projection, when information is received by the information receiving means.
Incoming notification images displayed by conventional image display means are used as a compliment to sound or vibration for incoming notifications, and cannot offer an incoming notification function with the image alone. Therefore, even if an incoming notification image displayed by the image display means is projected onto an external projection screen without change, the image alone was not able to consistently notify the user of incoming information.
In contrary to this, an information communication terminal according to the present invention projects an incoming notification image dedicated to projection as an incoming notification image to notify of incoming information when the information is received by the information receiving means. This incoming notification image dedicated to projection can be set up independently from incoming notification images displayed by the image display means. Therefore, the incoming notification images dedicated to projection can be set up for users to recognize visually and to get their attention easily, without constraints on incoming notification images displayed by the image display means. Projecting this incoming notification image dedicated to projection onto an external project screen enables users to be notified that an incoming notification image is projected onto the external projection screen and to direct users' attention to the incoming notification image.

Furthermore, the above-mentioned information communication terminal preferably comprises: information receiving means for receiving information via communication network; and sound output means for outputting sound, and when information is received by the information receiving means, the control means controls the sound output means so as to output incoming sound dedicated to image projection timing, which is different from normal incoming sound when the foregoing dedicated image for projection are not projected. This information communication terminal projects incoming notification images for notifying of an incoming of information onto an external projection screen which is visible by users when the information is received by the information receiving means. Then, along with the projection of this incoming notification image, it outputs incoming sound dedicated to image projection timing, which is different from normal incoming sound when an image is not projected. This incoming sound dedicated to image projection timing is able to notify users that an incoming notification image is projected onto an external projection screen and to direct the attention of users to the incoming notification image.

Further, in the information communication terminal, the control means preferably controls so that an operation of the foregoing image projection means is kept stopping during standby status for receiving the information, and an image projection is started by activating the image projection means when information is received by the information receiving means. Since, by stopping operation of the image projection means during standby status for receiving the information, this information communication terminal does not wastefully consume power in image projection means, wasteful power consumption by the image projection means can be avoided during standby status for receiving information. Then, when information is received by the information receiving means, by activating the image projection means for starting image projection, an incoming notification image is consistently projected onto an external projection screen.

Furthermore, in the above-mentioned information communication terminal, the foregoing data memory means preferably memorizes data of multiple kinds of individual images which are different from each other, including displayable images on the image display means and the dedicated images for projection, and the control means controls the image projection means for combining data of multiple individual images which are selectively read out from the data memory means, to generate data of a dedicated image for projection as a subject to be projected, and to project the dedicated image for projection as a subject to be projected onto an external projection screen. At this point, projection embodiment of the above-mentioned image dedicated to projection as a subject to be projected is not limited to any specific one. For example, as described later, it can be projected by allocating each of multiple kinds of individual images to multiple individual areas which are different from each other onto an external projection screen, or by projecting multiple kinds of individual images to be overlapped.
In case of the above-mentioned overlapped projection, for example, an embedded projection area is setup for one part of an individual image and another individual image is projected so as to be embedded into the embedded projection area. Also, it may set a priority for each individual image and project an image with higher priority for area where each of the individual images overlap. The shapes of the embedded projection areas are not limited to special shapes, and can be set to be of any shape. In addition, for the above-mentioned overlapping projection case, one individual image may be set as a background image, and another individual image may be overlapped and projected as a transparent image left with text parts on the background image.
This information communication terminal projects a dedicated image for projection as a subject to be projected, which are generated by combining data of multiple individual images selected from multiple kinds of individual images including displayable images on the display unit and dedicated images for projection, onto an external projection screen. Users are able to confirm multiple kinds of individual images at the same time by viewing these images onto the external projection screen. Furthermore, users are not required to perform screen switching to confirm these multiple individual images.

Moreover, the above-mentioned information communication terminal preferably projects by allocating each of the multiple kinds of individual images to multiple individual projection areas which are different from each other onto the external projection screen. This information communication terminal projects each of individual images without overlapping each other by allocating the individual images to multiple individual projection areas which are different from each other onto the external projection screen, and can avoid interference between each individual image avoided so that each entire individual image can be consistently recognized visually.

Further, in the above-mentioned communication terminal, preferably, the above-mentioned image display means comprises multiple display units, and multiple kinds of individual images to be projected together onto the external projection screen are individual images which are different from each other and displayed on each display unit. This information communication terminal projects multiple kinds of individual images, which are displayed on multiple display units, together onto the same external project screen. Users are able to confirm the multiple kinds of individual images displayed on each display unit at the same time by viewing the images onto this external projection screen. In this manner, on the same external projection screen, multiple kinds of individual images which are different from each other and displayed on multiple display units can be confirmed at the same time.

Furthermore, the above-mentioned information communication terminal preferably comprises: projection image designation means for users to designate individual images to be combined to the dedicated image for projection as a subject to be projected, and the above-mentioned control means generates data of a dedicated image for projection as a subject to be projected by combining multiple individual image data designated by using the projection image designation means. This information communication terminal can project a dedicated image for projection, which are combined from multiple individual images designated by users via the projection image designation means, together onto the external projection screen, and allows users to designate multiple individual images forming a dedicated image for projection to be projected onto the external projection screen.

Furthermore, the above-mentioned information communication terminal preferably comprises a plurality of the above-mentioned image projection means, and the above-mentioned control means controls the plural image projection means independently. This information communication terminal can project images from each image projection means onto each different projection screen by controlling the plural image projection means with the control means.
Furthermore, this information communication terminal preferably comprises designation means for designating at least one of the foregoing plural image projection means, and the above-mentioned control means controls the projection of images with image projection means designated by the designation means. In this information communication terminal, if a user specifies one of the multiple image projection means with the designation means, the control means controls the image projection means, and images from the designated image projection means are projected onto the project screen so that the user can switch the image projection means for projecting the images.

Also, the above-mentioned information communication terminal preferably comprises light quantity designation means for designating the light quantity for the above-mentioned image projection means, and the above-mentioned control means controls the image projection means for obtaining the light quantity designated by the light quantity designation means. In this information communication terminal, if a user specifies the light quantity with the light quantity designation means, the control means controls the image projection means and the image projection means obtains the light quantity designated by the light quantity designation means. In this manner, a user can set up light quantity for the image projection means to the appropriate light quantity according to the kind of project screen, so that wasteful power consumption can be reduced while maintaining visual recognition of projection images.

Furthermore, in the above-mentioned information communication terminal, the above-mentioned image projection means is preferably configured by using a projection optical system which projects images displayed on the display unit setup for the image display means onto the external project screen. This information communication terminal is able to display an image as a subject of projection on the display unit and project the image displayed on this display unit so that the display unit is also used as a light source for the image projection means.
The image display means preferably allows the variable setup of the light quantity for the display unit that displays an image as a subject of projection. In this manner, if the light quantity setup is variable, the light quantity of the display unit can be set to an appropriate light quantity according to the status of the external projection screen or the room light where images are projected. For example, when the external projection screen is a curved surface or rough surface, or visually colored so as to be difficult to recognize, the light quantity of the display unit should be set higher. Or when images on the display unit are enlarged and projected onto the external projection screen, the light quantity of the display unit should be set higher than at normal image display since this may result in making it difficult to visually recognize due to lower light quantity of the images projected.
The light quantity setup for the above-mentioned display unit may be switched in accordance with specifications designated by users with light quantity designation means, or may be switched automatically to a predetermined light quantity when the control means starts image projection.

Furthermore, in the above-mentioned information communication terminal, preferably, the above-mentioned projection optical system projects images flipped horizontally on the display unit, and the above-mentioned control means is able to control the above-mentioned image display means for displaying mirror reversed images on the display unit by horizontally flipping images at normal image display. This information communication terminal displays images in a normal horizontal direction on the display unit at normal image display. Then, when projecting images, the control means controls the image display means, and images are displayed on the display unit by horizontally flipping the ones at normal image display. These mirror-reversed images are again horizontally flipped by the projection optical system so that the images projected onto the external projection screen become images in a normal horizontal direction. In this manner, when projecting images, mirror reversed images can be displayed on the display unit by flipping horizontally images at normal image display, and images on this display unit can be projected onto the external project screen after horizontally flipping the images on the display unit again so that images such as text information can be projected in the correct horizontal direction, the same as at normal image display.

Furthermore, the above-mentioned information communication terminal preferably comprises light quantity designation means for designating light quantity for the above-mentioned image display means, and the above-mentioned control means controls the image display means for getting the light quantity designated by the light quantity designation means when projecting images. In this information communication terminal, if a user specifies the light quantity with the light quantity designation means, the control means controls the image display means and the image display means gets the light quantity designated by the light quantity designation means. In this manner, a user can set the light quantity of image display means to the appropriate light quantity according to the kind of projection screen so that wasteful power consumption can be reduced while maintaining visual recognition of projection images.

Moreover, the above-mentioned information communication terminal preferably comprises application execution management means for managing the application program execution environment, and the above-mentioned control means controls the initiation of image projection by activating the above-mentioned image projection means when image projection instructions are received from the application execution management means. This information communication terminal activates the image projection means when image projection instructions are received from the application execution management means, and stops operations of the image projection means during no image projection. Doing this allows the image projection means to not waste power consumption so that wasteful power consumption can be avoided by the image projection means when no images are being projected.

The above-mentioned "information communication terminal" includes a mobile phone of the PDC (Personal Digital Cellular) system, GSM (Global System for Mobile Communication) system and TIA (Telecommunications Industry Association) system etc., an IMT (International Mobile Telecommunications)-2000 standardized mobile phone, and a mobile phone of TD-SCDMA (MC: Multi Carrier) system which is one of TD-SCDMA (Time Division Synchronous Code Division Multiple Access) system as well. Also, an "information communication terminal" includes PHS (Personal Handyphone System), telephones such as automobile phones, an information communication terminal with a mobile phone module, and a fixed phone.
Also, control in the above-mentioned communication information terminal can also be realized by allowing a computer provided to the mobile communication terminal to execute a predetermined program. Receiving and passing of a program used on the computer may be performed using a recording medium, such as a Flexible Disk or a CD-ROM, having recorded thereon a program as digital information, or may be performed using a communication network such as a computer network.

### Effects of the Invention

According to the present invention, images utilizing a feature of image projection can be projected, since a dedicated image for projection which is different from images displayed by image display means can be projected without constraints on displaying images with the image display means.

### Brief Description of Drawings

Fig. 1 is a block diagram showing an example of the overview configuration of a mobile phone according to the first embodiment.
Fig. 2 is a block diagram showing a configuration example of the image projection unit of the same mobile phone.
Fig. 3 is a block diagram showing another configuration example of the same image projection unit.
Fig. 4 is an illustrative diagram showing image projection by a mobile phone equipped with the same image projection unit.
Fig. 5A is an illustrative diagram of an incoming notification image projected by the same image projection unit.
Fig. 5B is an illustrative diagram of an image of incoming history information projected by the same image projection unit.
Fig. 5C is an illustrative diagram of an image of new incoming information lists projected by the same image projection unit.
Fig. 6A is an illustrative diagram of an incoming notification image projected by the same image projection unit.
Fig. 6B is an illustrative diagram of an incoming notification image projected by the same image projection unit.
Fig. 6C is an illustrative diagram of images of incoming history information projected by the same image projection unit.
Fig. 7 is a flow chart showing the incoming process flow when information is received in the same mobile phone.
Fig. 8 is a sequence chart showing the process flow to project a new incoming notification image when a new mail is received.
Fig. 9 is a sequence chart showing an example of the process flow to project a new incoming notification image when a call is received.
Fig. 10 is a sequence chart showing an example of the process flow to project a new incoming notification image when new information is received from an information provider system via a mobile telecommunication network.
Fig. 11 is a block diagram showing an example of a configuration overview of a mobile phone capable of executing application programs.
Fig. 12 is an illustrative diagram showing an example of software configuration on the same mobile phone.
Fig. 13 is a sequence chart showing an example of the process flow to project a new incoming notification image when a new mail is received on the same mobile phone.
Fig. 14 is a sequence chart showing an example of the process flow to project a new incoming notification image when a call is received on the same mobile phone.
Fig. 15 is an illustrative diagram showing a mobile phone according to the second embodiment projecting an image.
Fig. 16 is an illustrative diagram of images projected by the same image projection unit.
Fig. 17 is a flow chart showing the projection control process in the control unit of the same mobile phone.
Fig. 18A is an illustrative diagram showing an example of projection images projected by combining individual images displayed on each unit of multiple display units.
Fig. 18B shows an illustrative diagram showing another example of projection images projected by combining individual images displayed on each unit of multiple display units.
Fig. 19 is a flow chart showing the projection control process in the control unit of the same mobile phone.
Fig. 20 is a block diagram showing an example of a configuration overview of a mobile phone according to the third embodiment.
Fig. 21 is a block diagram showing a configuration example of the image projection unit in the same mobile phone.
Fig. 22 is a partial side view of a mobile phone with the image projection unit in Fig. 21.
Fig. 23 is an illustrative diagram showing the same mobile phone is projecting images.

### Description of Reference Numerals

- 100: MOBILE PHONE
- 111: CONTROL UNIT
- 113: WIRELESS COMMUNICATION UNIT
- 119B: REAR DISPLAY
- 130: IMAGE PROJECTION UNIT
- 200: PROJECTION SCREEN
- 200a∼200d: DIVIDED PROJECTION AREAS

### Best Mode for Carrying Out the Invention

### [First Embodiment]

Firstly, a first embodiment of the present invention is described.

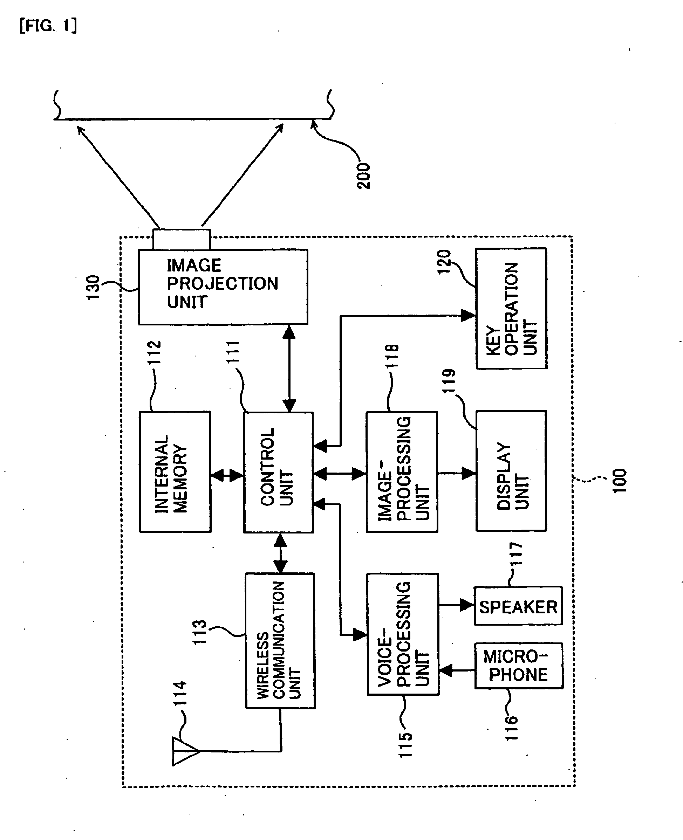

Fig. 1 is a block diagram showing an example of a configuration overview of a mobile phone as an information communication terminal according to the first embodiment. This mobile phone according to this embodiment consistently notifies a user of incoming information by projecting a dedicated image for projection when information such as mail is received.
In Fig. 1, a mobile phone 100 comprises: a control unit 111 as control means, an internal memory 112, a wireless communication unit 113 as information receiving means and an antenna 114. The control unit 111 connects with a microphone 116 and a speaker 117 via a voice-processing unit 115, connects with a display unit 119 via an image process unit 118, and further connects with a key operation unit 120.
The mobile phone according to this embodiment comprises an image projection unit 130 as the image projection means for projecting images onto an external projection screen (hereinafter referred as a "projection screen") 200 that is visually recognized by users.

The control unit 111 is configured with, for example, a CPU, a cache memory, a system bus and the like, and by executing the predetermined control program, performs sending/receiving of data between each part of the internal memory 112 or the wireless communication unit 113 as such, and controls each unit. This control unit 111 is used as control means for controlling image projection of later described image projection unit 130.

The internal memory 112 is configured with, for example, a semiconductor memory such as RAM or ROM and memorizes control programs executed by the control unit 111 and various kinds of data. This internal memory 112 is used as content data memory means for memorizing contents data such as images, music and programs downloaded from information provider sites etc. Furthermore, this internal memory 112 is also used as data memory means for memorizing sound data to be output from the speaker 117, data of images for displaying to be displayed on the display unit 119, and data of dedicated images for projection to be projected with the image projection unit 130.

The wireless communication unit 113 is controlled by the control unit 111 and via the antenna 114, performs wireless communication between base stations of mobile telecommunication networks as communication networks with predetermined communication systems. This wireless communication enables voice communication between certain mobile phones, sending and receiving e-mails and data communication such as content download from information provider sites.

The voice-processing unit 115 encodes sending voice signals that are input from the microphone 116 with predetermined systems and sends them to the control unit 111. This voice-processing unit decodes receiving voice signals that are received by the wireless communication unit 113 and outputs them from the speaker 117. Furthermore, this voice-processing 115 outputs incoming melodies memorized in the internal memory 112, and voice signals such as sound effect used by application programs. The sound output means for outputting sound is configured with the voice-processing unit 115 and the speaker 117.

The image-processing unit 118 processes image data received by the wireless communication unit 113 and image data such as icons, menus and incoming notification images memorized in the internal memory 112, and displays them on the display unit 119 having a liquid crystal display (LCD) provided on the mobile phone body. The image display means is configured with the image-processing unit 118 and the display unit 119.

The key operation unit 120 comprises data input keys (numeric keys, a * key, and a # key), a call start key, a call end key, a scroll key and a multi-function key, which are used to send and receive calls as well as scroll or select information displayed on the display unit 119.

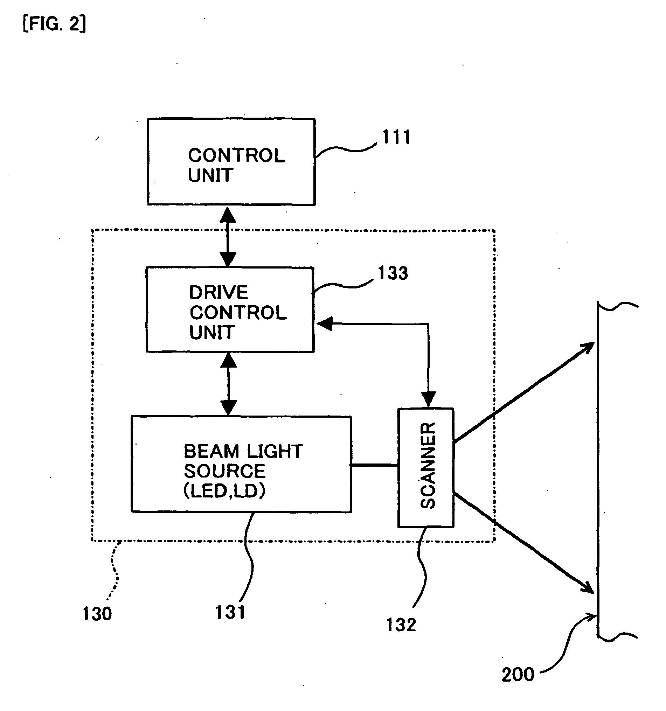

Fig. 2 is a block diagram showing a configuration example of the image projection unit 130. This image projection unit 130 is configured with a beam light source 131, an optical scanner 132, and a drive control unit 133 to drive them. For the beam light source 131, LD (Laser Diode) or LED (Light-Emitting Diode) can be used. The strength of the beam light output from the beam light source 131 is controlled by the drive control unit 133 based on control data sent from the control unit 111. The optical scanner 132 is an optical device for projecting onto the projection screen 200, scanning a beam light output from the beam source 131 two-dimensionally. Beam light scanning by the optical scanner 132 is drive-controlled by the drive control unit 133 in the same way as the beam light source 131. For this optical scanner 132, for example, one with small type galvano mirrors capable of high speed scanning can be used. In addition, the drive control unit 133 comprises image memory to memorize image data and pre-registered data of images as subjects to be projected, and data for images as subjects to be projected sent with control data from the control unit 111 are memorized. The beam light source 131 and the optical scanner 132 are drive-controlled based on the image data memorized in this image memory.
As the beam light source 131, by using a light source capable of outputting multiple types of beam lights (e.g. three primary-color beam lights) with different wavelength each other, and if each beam light is scanned at same time and projected, color images can be projected onto the project screen 200.
As the beam light source 131, a light source formed with one-dimensional array elements having luminous points aligned in a row can be used, wherein light intensity of the luminous points can be controlled independently each other. In this case, line-shape light output from the light source may be scanned one-dimensionally by the optical scanner 132.
As the beam light source 131, a light source formed with two-dimensional array elements having luminous points aligned in two-dimensionally can be also used, wherein light intensity of the luminous points can be controlled independently each other. In this case, instead of the optical scanner 132, an enlarged projection optical system which projects onto the projection screen 200 by enlarging two-dimensional images displayed on the light sources is used.

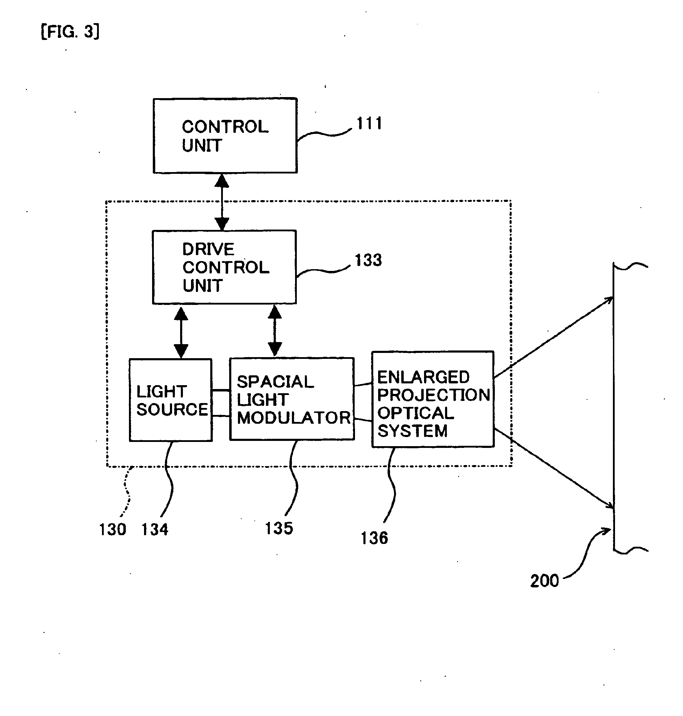

Fig. 3 is a block diagram showing another configuration of the image projection unit 130. This image projection unit 130 is comprised of a light source 134 such as a lamp, a spatial light modulator 135, an enlarged projection optical system 136 and the drive control unit 133.
As the spatial light modulator 135, for example, a liquid crystal display used by a normal mobile phone and the like can be used. In this case, an image is displayed reversing black and white opposite to the display mode on a transparent type of liquid crystal display. Light from the light source 134 is irradiated on the liquid crystal display surface on which an image is displayed reversing black and white in this manner, and the reflected image is enlarged by the enlarged projection optical system 136 and projected on the projection screen 200. As this liquid crystal display, a liquid crystal display provided on a normal mobile phone and the like may also be used as well.
As the spatial light modulator, a light modulator in which small mirrors aligned two-dimensionally can be used, wherein the tilt of small mirror can be controlled independently. In this case, based on image data, the tilt of each mirror is controlled, and reflected light towards the projection screen 200 from each mirror is switched on/off. This reflected image from the special light modulator 135 is enlarged by the enlarged projection optical system 136 and projected onto the projection screen 200.

The above-mentioned image projection unit configuration is not limited to the configurations in Fig. 2 and Fig. 3. For example, the image projection unit may be configured so as to project an image using hologram elements. The image projection unit may be also configured so as to project at a wide angle. For example, an image can be projected at a wide-angle using the whole inner wall of a room as a projection screen. In this case, for example, an elaborate incoming notification that has never been seen before will become possible, such as projecting a sky image with stars in the whole room as in a planetarium.

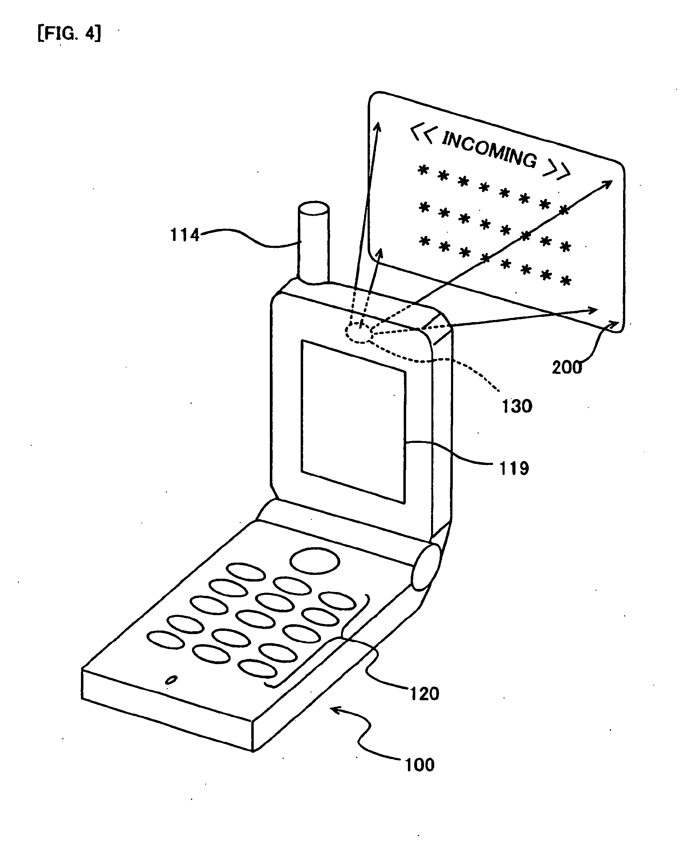

Fig. 4 is an illustrative diagram showing an appearance of image projection on the folding type of mobile phone 100 with the image projection 130. This mobile phone 100 is in standby status and placed on a table with the light beam window facing the desired projection screen 200 or set in a battery charger for the mobile phone. Then, a user sets either normal image display mode for performing no image projection or image projection mode for performing image projection, by operating the key operation unit 120.

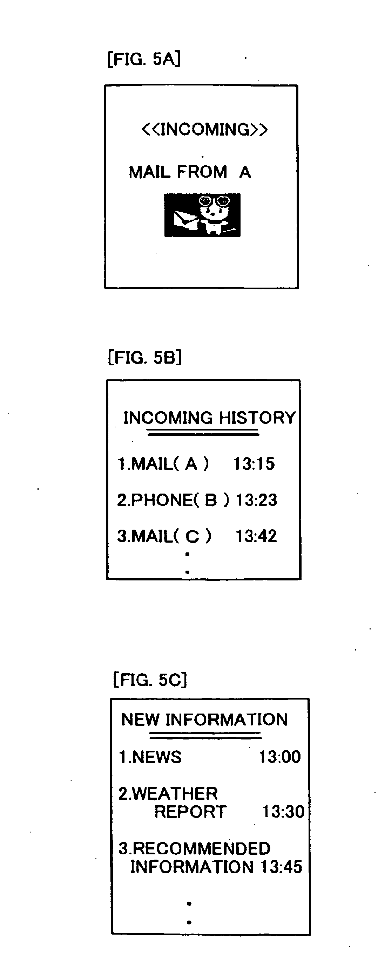

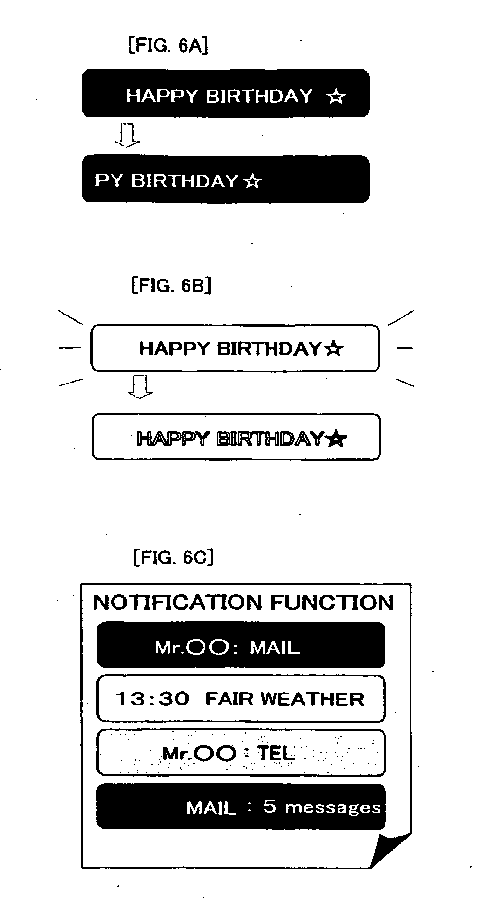

Figs. 5A - 5C and Figs 6A - 6C are illustrative diagrams showing examples of dedicated images for projection to be projected onto a projection screen from a mobile phone.
During standby status of a mobile phone set to image projection mode, the pre-set standby image data dedicated to image projection is read out from the internal memory 112, and the standby image is projected onto the project screen 200. Then, when a call or mail is received, incoming notification image data such as Fig. 5A is read out from the internal memory 112, and the incoming notification image is projected onto the projection screen 200. If a user does not perform any operation for receiving the call and browsing the mail, image data of incoming history information is read out from the internal memory 112 as an incoming notification image such as Fig. 5B which is a list of this new incoming information, and the incoming history information is projected onto the projection screen 200. If an information provider service is used in order to send information via wireless communication networks from the server on the mobile communication network, when new information is received, incoming notification image data for new information is read out from the internal memory 112 and the new incoming information notification image is projected onto the projection screen 200. If a user does not perform any operation for browsing the new information, incoming notification image data listing new information such as Fig. 5C is read out from the internal memory 112 and the incoming notification image is projected onto the projection screen 200.

The incoming notification images projected onto the above-mentioned projection screen 200 are incoming notification images dedicated to projection. These incoming images dedicated to projection can be set independently from normal incoming notification images displayed on the display unit 199. Therefore, without constraints on incoming notification images displayed by image display means, incoming notification images dedicated to projection can be set for users to visually recognize and to get their attention easily. For example, as shown in Fig. 6A, the incoming notification image includes an image section of text information ("Happy Birthday") processed by scrolling horizontally to get the users' attention easily. As shown in Fig. 6B, the incoming notification image may include an image section of text information processed by flicking to get the users' attention easily. In the case of an incoming notification image including incoming history information as shown in Fig. 6C, it is projected with each item in all received information having a different shade or color of image to get users' attention easily. In the case of an incoming notification image including incoming history information, standing out by scrolling or flicking only the image section of the information item received most recently (e.g. "Mr. XX: Incoming Call" in Fig.6C), a user may be notified that the item is received most recently.

The above-mentioned incoming notification image may project different images depending on a transmitter of telephone or mail. In this case, the internal memory 112 is used as transmitter information memory means for memorizing information of transmitter of telephone or mail. Then, based on incoming information received by the wireless communication unit 113, information of a corresponding transmitter is read out from the internal memory 112, and a control is performed so that the information of transmitter is included in the aforementioned incoming notification image. As stated above, by including the information of transmitter in the incoming notification images, it can be determined immediately who is the transmitter of telephone or mail, by simply observing the incoming notification image projected on the project screen 200.

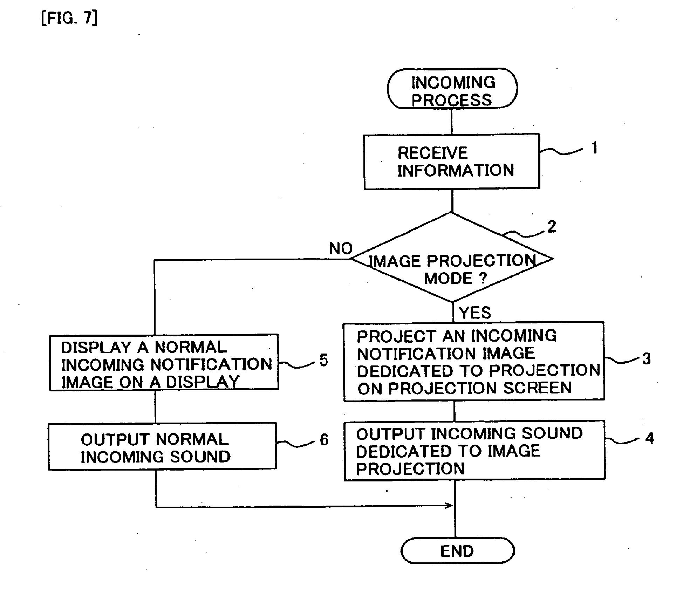

Fig. 7 is a flow chart showing an incoming process flow when information is received on a mobile phone according to the present embodiment. When the mobile phone receives information such as mail, the control unit 111 determines whether the image projection mode to project an image is selected or not (Steps 1 and 2). If the image projection mode is selected, the incoming notification image dedicated to projection is projected onto the projection screen 200, and the incoming sound dedicated to image projection, which is different from normal incoming sound, is output (Steps 3 and 4). On the other hand, if the image projection mode is not selected, a normal incoming notification image is displayed on the display unit 119 such as liquid crystal display, and normal incoming sound is output (Steps 5 and 6).

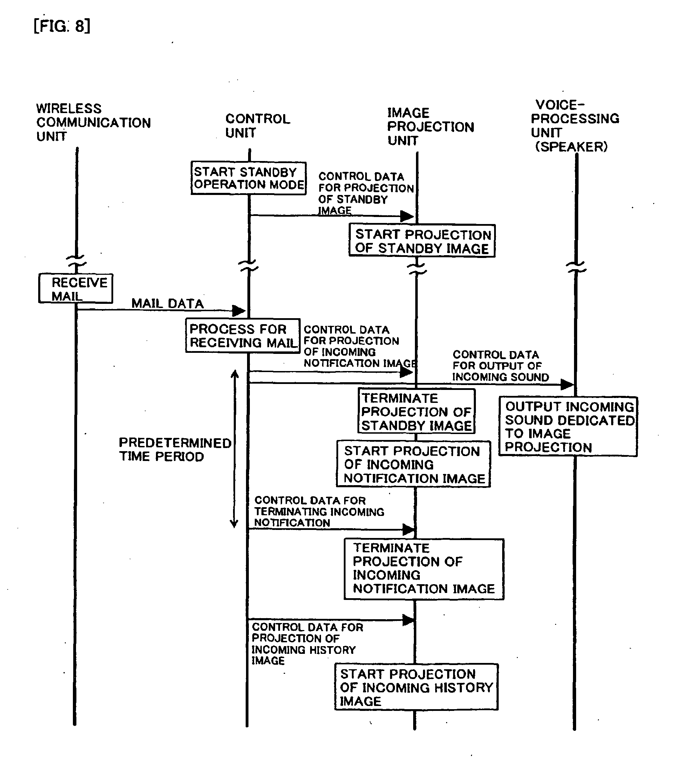

Fig. 8 is a sequence chart showing an example of process flow to project an incoming notification image when a new mail is received under the image projection mode selected.
Firstly, during the state in which the image projection mode is selected to perform image projection by a user, if the standby operation in which it is possible to receive a mail is executed in the control unit 111, a control data for standby image projection is sent from the control unit 111 to the drive control unit 133 of the image projection unit 130. Based on this control data for standby image projection, the pre-set standby image dedicated to projection will start being projected.
In this standby state, if the wireless communication unit 113 of the mobile phone 100 receives a mail via a mobile communication network, the mail data is sent to control unit 111. The control unit 111 performs a data process to receive the mail in accordance with a predetermined control program. Then, a control data for incoming notification image projection for mail is sent from the control unit 111 to the image projection unit 130, and a control data for incoming sound output is sent from the control unit 111 to the voice-processing unit 115. The image projection unit 130 stops projection of the foregoing standby image and starts projection of the incoming notification image dedicated to projection as shown in Fig. 5A, 6A or 6B. The voice-processing unit 115 outputs incoming sound dedicated to image projection for a predetermined period of time based on the control data for incoming sound output. This dedicated incoming sound for image projection and the dedicated incoming notification image for projection projected on the projection screen 200 allow users to be notified that an incoming notification image is projected onto the project screen 200 and directs their attention to the incoming notification image. Then, a user viewing the incoming notification image on the image screen 200 can confirm the incoming mail visually.
Next, after starting projection of the incoming notification image, when a predetermined period of time elapses, a control data to stop the incoming notification is sent from the control unit 111 to the image projection unit 130, and projection of the incoming notification image is stopped. Then, a control data for incoming history image projection is sent from the control unit 111 to the image projection unit 130 and a projection of the incoming history image dedicated to projection as shown in Fig. 5B and Fig. 6C is started. The projection of this incoming history image onto a predetermined projection screen allows users to confirm the incoming history of mail and the like visually.

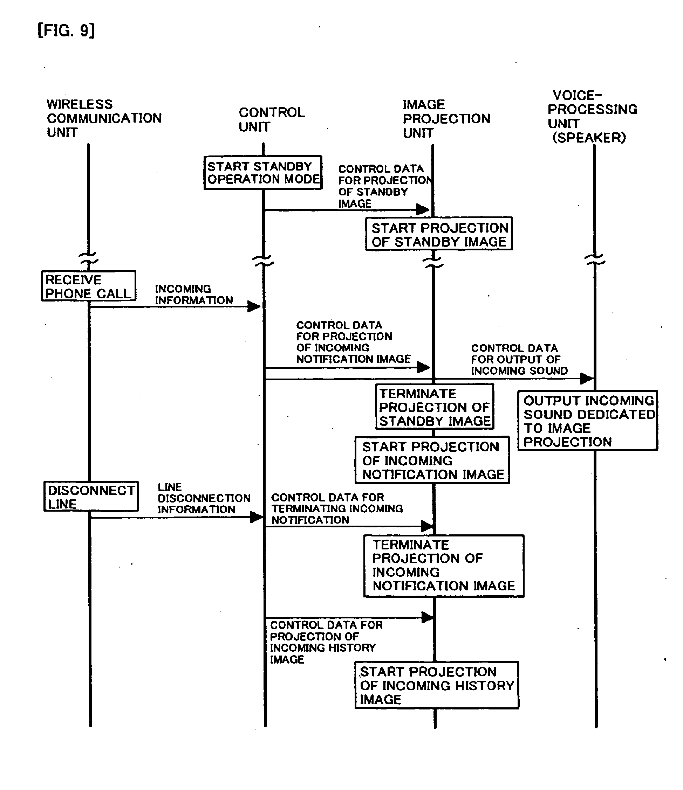

Fig. 9 is a sequence chart showing an example of process flow to project an incoming notification image when a telephone call is received under the image projection mode selected. This example shows the case when a user does not respond to the incoming telephone call.
Firstly, in the standby state as described above, when the wireless communication unit 113 of the mobile phone 100 receives a telephone call via a mobile communication network, incoming information is sent to the control unit 111. The control unit 111 receiving the incoming information sends a control data for incoming notification image for telephone to the image projection unit 130, and sends a control data for incoming sound output to the voice-processing unit 115. In the image projection unit 130, based on the control data for incoming notification image projection, a projection of the standby image is stopped and a projection of the incoming call notification image dedicated to projection is started. The voice-processing unit 115 outputs incoming sound dedicated to image projection for a predetermined period of time based on the control data for incoming sound output. This incoming sound dedicated to image projection and incoming call notification image dedicated to projection projected on the project screen 200 allows users to be notified that an incoming notification image is projected onto the project screen 200 and directs their attention to the incoming notification image.
Then, a user viewing the incoming notification image on the projection screen 200 can confirm the incoming of mail visually.
Next, after starting projection of the incoming notification image, in the state of no user response, when the wireless communication unit 113 receives a signal of network disconnection, the network disconnection information is sent to the control unit 111. Then, a control data to stop the incoming notification is sent from the control unit 111 receiving the network disconnection information to the image projection unit 130, and a projection of the incoming notification image is stopped. Then, a control data for the incoming history image projection is sent from the control unit 111 to the image projection unit 130, and a projection of the incoming image dedicated to projection is started, as shown in Fig. 5B and Fig. 6C. The projection of this incoming history image onto a predetermined projection screen allows users to confirm the incoming history such as a telephone call and the like visually.

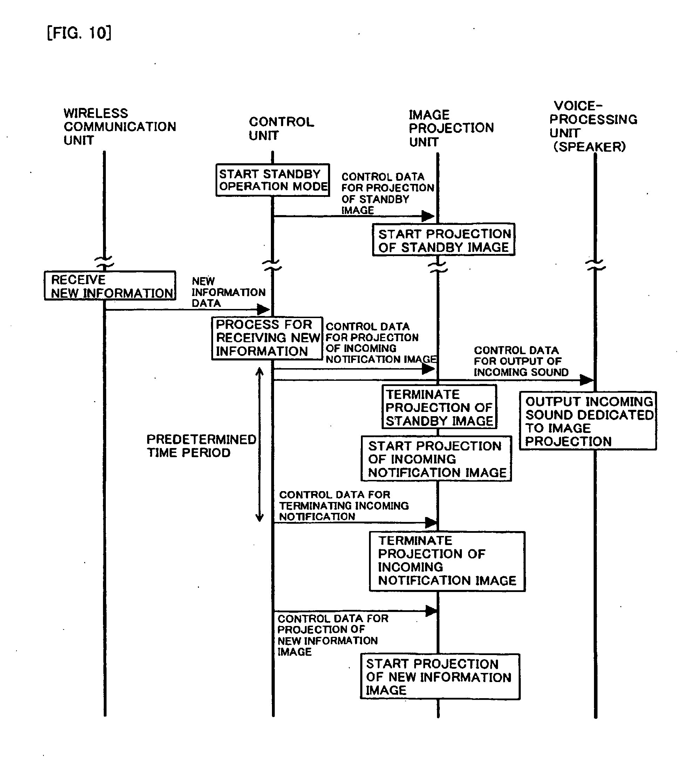

Fig. 10 is a sequence chart showing an example of process flow to project an incoming notification image when new information is received from an information providing system via a mobile phone communication network under the image projection mode selected.
Firstly, as stated above, in the state of executing the standby operation mode, when the wireless communication unit 113 of the mobile phone 100 receives new information via a mobile phone communication network, the new information data is sent to the control unit 111. The control unit 111 executes a data process of receiving new information in accordance with a predetermined control program. Then, a control data for the incoming notification image projection for new incoming information is sent from the control unit 111 to the control projection unit 130, and a control data for incoming sound output is sent from the control unit 111 to the voice-processing unit 115. The image projection unit 130 stops a projection of the standby image based on the control data for the incoming notification image projection, and a projection of the incoming notification image dedicated to projection is started. Also, the voice-processing unit 115 outputs incoming sound dedicated to the image projection based on the control data for incoming sound output for a predetermined period of time. This incoming sound dedicated to image projection and the incoming notification image dedicated to projection projected onto the projection screen allow users to be notified that the incoming notification image is projected on the projection screen 200 and to direct their attention to the incoming notification image. Then, users viewing the incoming notification image on the project screen 200 can confirm the receiving of new information visually.
Next, after starting projection of the new incoming information image, when a predetermined period of time elapses, a control data to stop the incoming notification is sent from the control unit 111 to the image projection 130, and a projection of newly received information image is stopped. Then, a control data for projection of newly received information image is sent from the control unit 111 to the image projection unit 130, and a projection of newly received information list image dedicated to projection is started as shown in Fig. 5C. The projection of this newly received information list image on a predetermined projection screen allows users to confirm the newly received information list visually.

As stated above, according to the first embodiment of the present invention, a projection of an incoming notification image dedicated to projection allows users to be notified that the incoming notification image is projected onto a projection screen and directs their attention to the incoming notification image. Therefore, incoming information can be notified to users more accurately. When incoming sound for image projection is output as well as the projection of incoming notification images dedicated to projection, the incoming sound dedicated to image projection allows users to be notified that incoming notification images are projected onto a projection screen more accurately and directs users' attention to the incoming notification images.

In the above-mentioned first embodiment, the operation of the image projection unit 130 may be controlled to stop in the state of standby for receiving information such as mail to be received, and an image projection may be started by activating the image projection unit 130 when information is received. In this case, by stopping the operation of the image projection unit 130 in the state of receiving the information, power consumption will not be wasted for the image projection unit 130. Therefore, wasteful power consumption can be avoided by the image projection unit 130 in the state of standby to receive information, and wasting batteries in the mobile phone 100 due to image projection can be avoided. In addition, when receiving information such as a mail, in starting image projection by activating the image projection unit 130, the incoming notification image can consistently be projected onto the projection screen.
The activation of the image projection unit 130 may always be executed for incoming information. Also, it may be controlled whether the image projection unit 130 is automatically activated or not when receiving information, according to the environment setup set by users.

In the above-mentioned first embodiment, the mobile phone may be controlled to allow projection of the incoming notification images (including incoming history images and new incoming information images) only while batteries (not shown) built-in the mobile phone are being charged. In this case, a charge detection circuit is set up in the mobile phone as charging existence or non-existence detection means for detecting whether batteries are charging or not. This charge detection circuit, for example, monitors charging current supplied from an external charging device via interface for external connection, and detects whether batteries are charging or not based on the existence or non-existence of a charging current. Then, the control unit 111 controls so that the foregoing incoming notification image and the like can be projected only when battery charging is detected for this charging detection circuit. Allowing the image projection only when batteries are being charged in this manner, batteries inside the mobile phone 100 are prevented from being wasted due to image projection.

The mobile phone 100 according to the first embodiment may be configured to be able to execute an application program developed in object-oriented programming which is independent of platforms. Then, activation of the image projection unit 130 and projection operation of incoming notification images by the image projection unit 130 may be executed based on instructions from an application program. For the application programs, application programs described in JAVA (Trademark), C, and C++ programming language can be listed. Also, this application program execution environment is built by middleware such as JAVA (Trademark) VM (Virtual Machine) and BREW (Trademark). The application program may be pre-installed in the mobile phone 100 and may be saved and registered in the mobile phone 100 after downloading from a download server via a mobile communication network as a communication network.

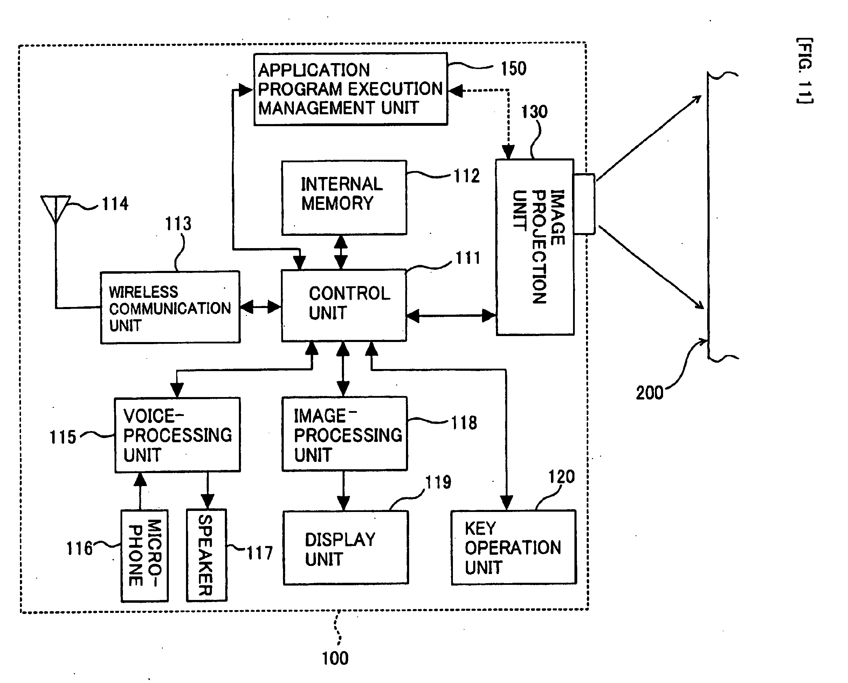

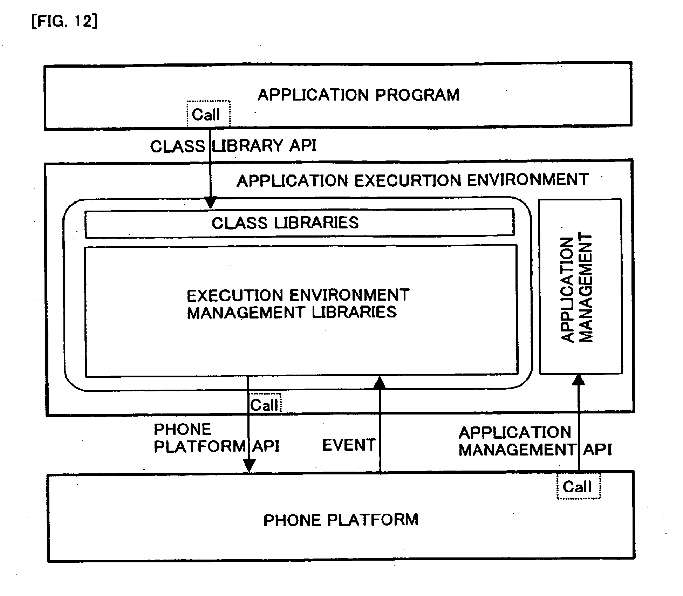

Fig. 11 is a block diagram showing an example of an overview configuration of a mobile phone capable of executing application programs, and Fig. 12 is an illustrative diagram showing an example of software configuration in the mobile phone. This mobile phone comprises the above-mentioned control unit 111 as well as an application program execution management unit 150 as application program execution means. This application program execution management unit 150 is configured with a system bus, a CPU and a RAM etc., and operates in accordance with a predetermined middleware for executing application programs. The application program execution management unit 150 corresponds to the central "program execution environment" in the software configuration in Fig. 12, provides software such as class libraries, execution environment management libraries, application management, etc. used by application programs developed in object-oriented programming, and manages application program execution environments.
The application program can be used by calling a class library such as a function in the program execution environment via class library API (Application Interface). The history of calling class libraries such as a function is kept until the virtual execution environment for application program (Virtual Machine: VM) exits. Also, the execution environment management libraries in the program execution environment can call phone platform libraries in the later described phone platform via phone platform API and use the phone platform libraries.
The foregoing control of image projection is performed by sending control instructions to the image projection unit 130 from the application program execution management unit 150 via the control unit 111. In addition, as shown by the dotted lines in Fig 11, it may be configured to execute control instructions by sending directly from the application program execution management unit 150 to the image projection unit 130.

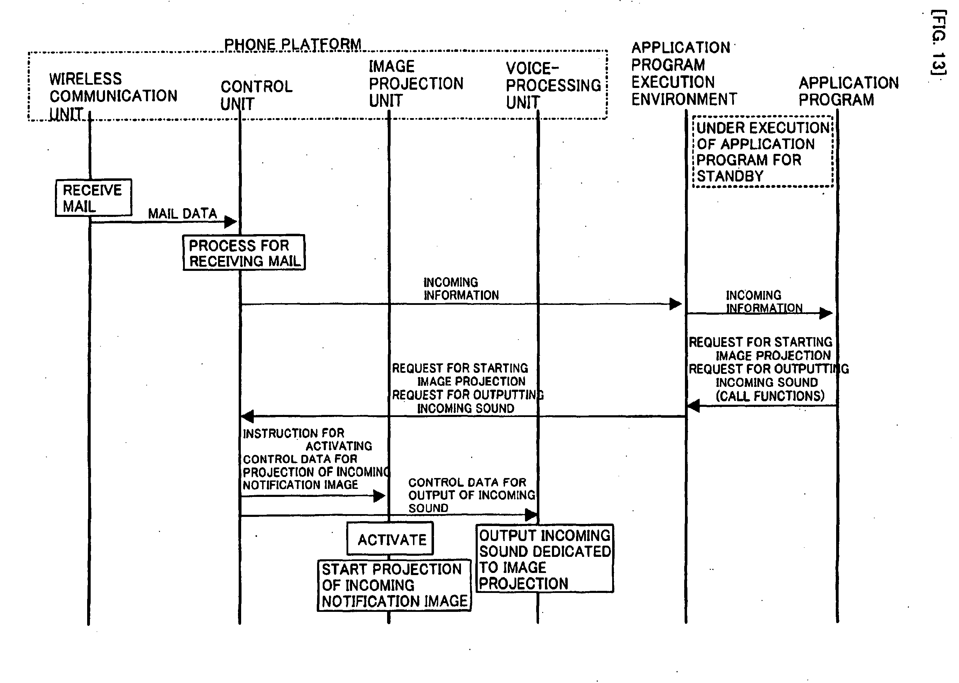

Fig. 13 is a sequence chart showing an example of the process flow to execute projection operation of incoming notification images by the image projection unit 130 based on instructions from application programs for standby during execution, when a new mail is received.
In this example, an application program for standby is executed in the state in which the image projection mode is selected for a user to perform image projection. In this standby status, when the mobile phone 100 receives a mail via a mobile communication network, the mail data is sent to the control unit 111. The control unit 111 executes data processing of mail received according to a predetermined control program. Then, mail incoming information is sent from the control unit 111 to the application program execution environment managed by the application program execution management unit 150. The application program calls up a predetermined function (method) for an image projection activation request instruction and an incoming sound output request instruction based on the incoming information, for the application program execution environment. The application program execution environment, in which this function (method) is called up, sends an image projection activation request instruction and an incoming sound output request instruction to the control unit 111.
The control unit 111 receiving the image projection activation request instruction and the incoming sound output request instruction sends an activation request instruction and control data for incoming notification image projection to the image projection unit 130, and sends control data for incoming sound output to the voice-processing unit 115 as well.
The image projection 130 is activated according to the activation request instruction and starts a projection of incoming notification image dedicated to projection based on the control data for incoming notification image projection. Also, the voice-processing unit 115 outputs incoming sound for image projection based on the control data for incoming sound output for a predetermined period of time. The incoming sound dedicated to image projection and the incoming notification image dedicated to projection projected onto the projection screen 200 allows users to be notified that the incoming notification image is projected onto the projection screen 200 and directs their attention to the incoming notification image. Furthermore, users viewing the incoming notification image on the projection screen 200 can confirm the incoming mail visually.

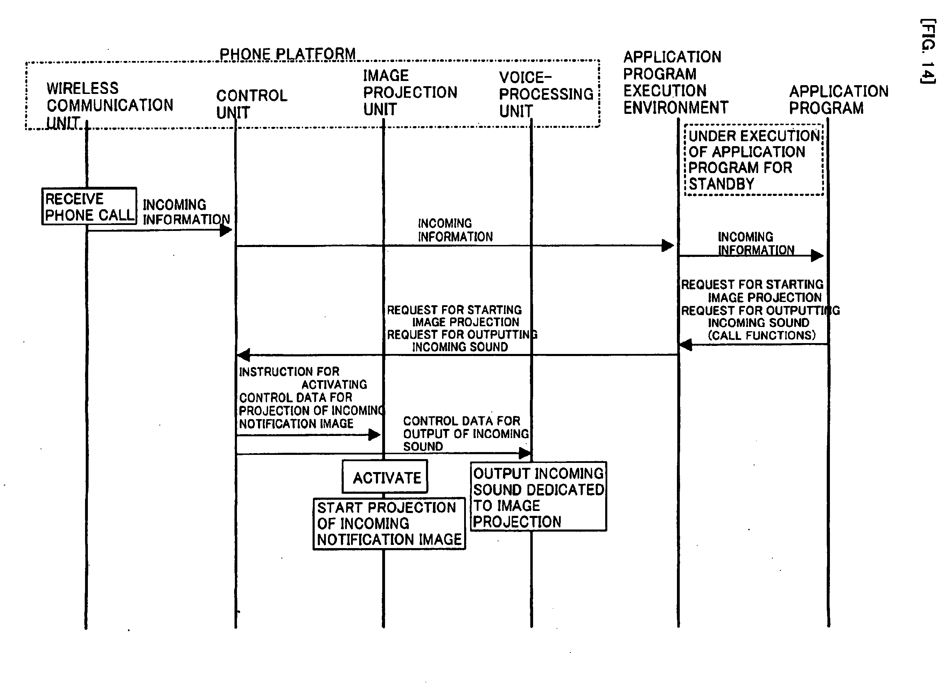

Fig. 14 is a sequence chart showing an example of process flow to execute the projection operation of an incoming notification image by the image projection unit 130 when a telephone call is received, based on instructions from application programs for standby in execution.
Firstly, as previously described, in the state of standby in which the standby application program is executed, when the wireless communication unit 113 of the mobile phone 100 receives a telephone call via a mobile communication network, the incoming information is sent to the control unit 111. The control unit 111 receiving the incoming information sends the incoming information to the application program execution environment managed by the application program execution management unit 150. The application program calls up a predetermined function (method) for an image projection activation request instruction and an incoming sound output request instruction based on the incoming information. The application program execution environment, in which the function (method) is called up, sends an image projection request instruction and an incoming sound output request instruction to the control unit 111.
The control unit 111 receiving the image projection activation request instruction and the incoming sound output request instruction sends an activation request instruction and control data for incoming notification image projection to image projection unit 130, and sends control data for incoming sound output to the voice control unit 115 as well.
The image projection unit 130 is activated according to the activation request instruction and starts projection of an incoming notification image dedicated to projection, based on the control data for incoming notification image projection. Also, the voice-processing 115 outputs incoming sound dedicated to image projection based on the control data for incoming sound output for a predetermined period time. This incoming sound dedicated to image projection and incoming notification image dedicated to projection projected onto the projection screen 200 allows users to be notified that the incoming notification image is projected onto the projection screen 200 and directs their attention to the incoming notification image. Furthermore, users viewing the incoming notification image onto the projection screen 200 can confirm the incoming telephone call visually.

In the examples of Fig. 13 and 14, activation of the image projection unit 130 and projection operation of incoming notification images are executed based on the application program for standby. However, they may be executed based on instructions from other application programs. For example, during execution of an application program specific for controlling projector functions, when a mail or telephone call is received, activation of the image projection unit 130 and projection operation of incoming notification images may be performed based on instructions from the application program.

In the above-mentioned Fig. 11 to Fig. 14, a mobile phone capable of executing an application program developed in object-oriented programming independent of platforms using program languages such as JAVA (registered trademark) is described, However, the present invention can be applied without limiting the type of application program.

In the above-mentioned embodiment, an identifier to identify whether an image is dedicated to projection or not may be added to the contents data of images projected on the image projection unit 130. Then, the identifier data attached to the contents data of images may be analyzed, and based on the analysis, it may be controlled whether the image is projected on the image projection unit 130 or not.

### [Second Embodiment]

Next, the second embodiment of the present invention is described.
A mobile phone as an information communication terminal according to the second embodiment of the present invention is configured to generate data for a single dedicated image for projection by combining multiple kinds of individual images, and to project the single dedicated image for projection onto the project screen 200.
For the overall configuration of the mobile phone of this embodiment and configuration of the image projection unit, the overview configuration shown in Fig. 1 and configuration of the image projection unit shown in Fig. 2 and Fig. 3 in the first embodiment described above can be employed and description of common parts will be omitted. Hereinafter, parts different from the above described configuration and operation according to the first embodiment will be described.

A key operation unit 120 of a mobile phone in this embodiment can be used as projection image designation means for users to designate individual images to be combined into a single dedicated image for projection projected all at once onto the project screen, from a display image displayable by switching to the display unit 119 comprising of a liquid crystal display and from multiple kinds of individual images comprising of one part of the display image.

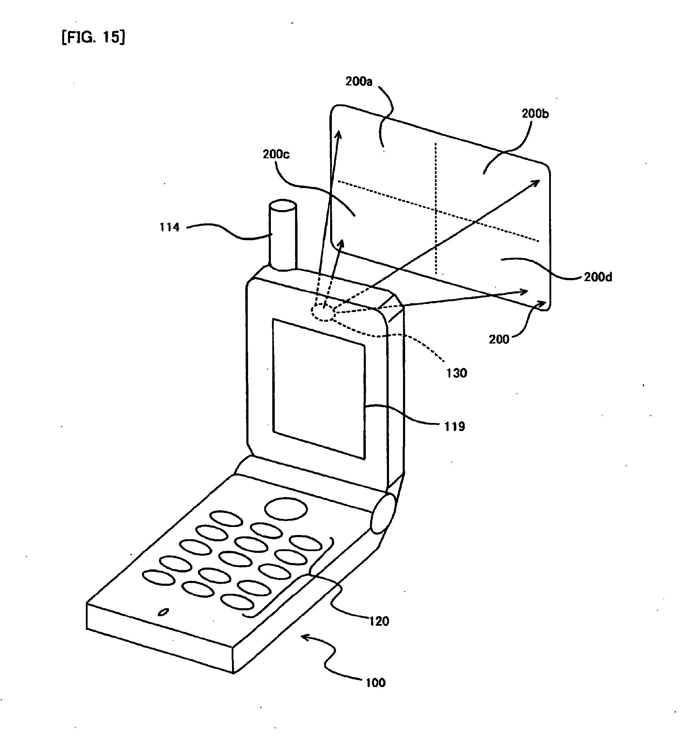

Fig. 15 is an illustrative diagram showing a mobile phone 100 projecting an image in this embodiment. This mobile phone 100 is, in the state of standby, placed on a table with a light beam window of the image projection unit 130 facing the desired projection screen 200, or set on a battery charger for mobile phones. Users set either the normal image display mode with no image projection or the image projection mode with image projection by operating the key operation unit 120. Then, the mobile phone 100 of this embodiment is configured to generate data of a single image dedicated to projection by combining multiple kinds of individual images which are displayable on the display unit and different from each other as shown below when executing the image projection mode, and also configured to be able to project the dedicated image for projection onto the projection screen 200. In the example shown in Fig. 15, data of dedicated images for projection is generated so as to project four kinds of individual images which are displayable and different from each other on the display unit 119, each on an individual projection area 200a-200d (Hereinafter referred as "divided projection area") which is a quarter of the projection screen 200.

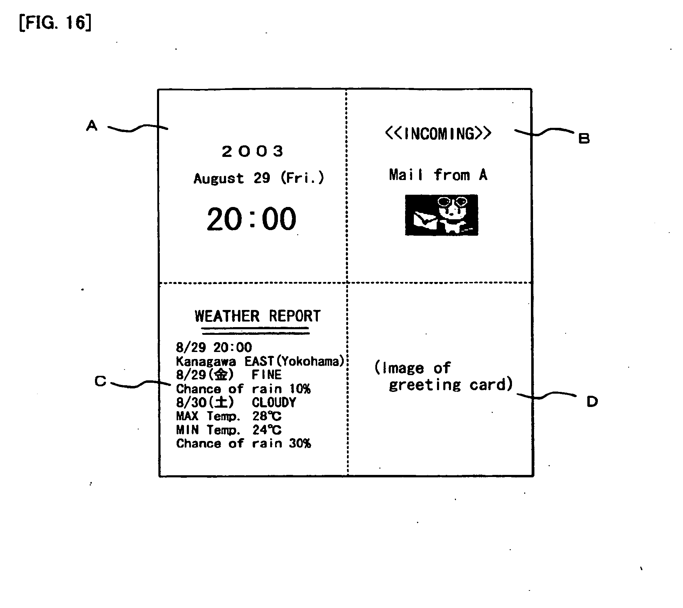

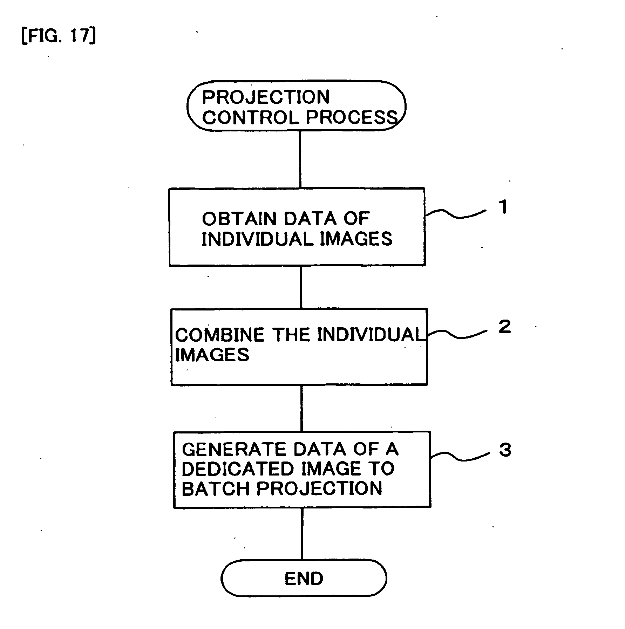

Fig. 16 is an illustrative diagram showing an example of projection images to be projected onto the projection screen 200 from the mobile phone 100. Fig 17 is a flow chart showing an overview of the projection control process by the control unit 111 when projecting images in Fig. 16. This mobile phone 100 can project a single image dedicated to projection combined from the four kinds of individual images A-D which are displayable on the display unit 119 in the normal projection display mode, onto the projection screen 200.

In the projection control process of the control unit 111, firstly, data used for each individual image is obtained (Step1). The first individual image A is an image displaying date and time to be projected onto the first divided projection area 200a. This data used for displaying date and time is generated in a clock unit (not shown here) in the control unit 111.
The second individual image B is an incoming notification image to be projected onto the second divided projection area 200b. The data used for this incoming notification images is generated in the control unit 111 when receiving telephone call, mail or information from a server on a mobile telecommunication network by the wireless communication unit 113.
The third individual image C is a receiving information display image to be projected onto the third divided projection area 200c. The data used for this receiving information display image is generated in the control unit 111 based on new incoming information data saved in a predetermined area of the internal memory 112 after being received by the wireless communication unit 113 from the server on mobile communication network.
The fourth individual image D is an image of a greeting card to be projected onto the fourth divided projection area 200d. The data used for this greeting card image is for example, generated in the control unit 111 based on selected image data linked to the specific date and time from multiple kinds of library images pre-saved in the internal memory 112.

Next, based on each of the individual images A-D data, a process is executed to combine each of individual image A-D to one dedicated image for projection shown in Fig. 16 (Step 2), and data of an image dedicated to projection is generated to be projected on the image projection unit 130 (Step 3). This image data generated by the control unit 111 is sent to the image projection unit 130, and a dedicated image for projection combined from the four individual images is projected onto the projection screen 200 as shown in Fig. 16.

As described above, according to the second embodiment of the present invention, users can confirm four kinds of individual images onto the projection screen 200 at the same time without the operation of switching screens, by generating data for one dedicated image for projection combined from four kinds of individual images, and projecting the dedicated image for projection onto the projection screen 200.
Also, according to this embodiment, each of four kinds of individual images is allocated to multiple divided projection areas 200a-200d which are different from each other onto the external projection screen and projected. By allocating in this manner, each of four kinds of individual images is projected so as not to be overlapped so that interference between each of the individual images can be avoided and each overall individual image is accurately recognized visually.

In the second embodiment, the individual images as subjects to be combined may be one part of display images to be displayed on the display unit 119 of the mobile phone as well. For example, it may be an image in a pictogram area where information such as electric field strength of radio waves used for wireless communication or remaining quantity of batteries are displayed, or a part of images in the pictogram area.
Image data for displaying and image data dedicated to projection saved in the internal memory 112 may be combined to generate data of one dedicated image for projection that is actually projected onto the projection screen after being combined.
Data of images dedicated to projection as subjects to be projected may be generated to incorporate or overlap one part of multiple individual images as subjects to be combined with other individual images.

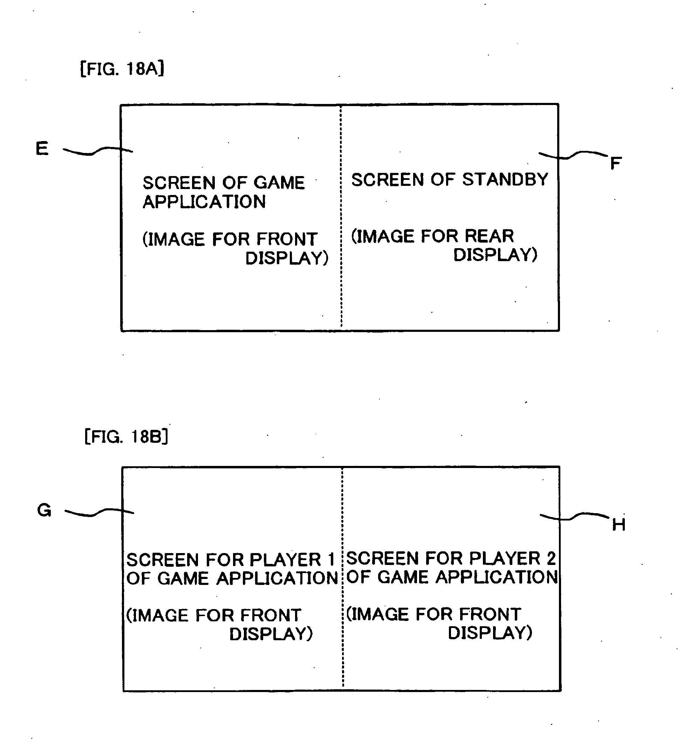

In the second embodiment, in the case in which the mobile phone 100 has multiple display units, individual images displayed on each display unit may be combined to be projected onto one projection screen. For example, in the case in which the mobile phone 100 has two display units, a front display and a rear display, as shown in Fig. 18A and Fig. 18B, images displayed on each display (individual display units) are combined to be projected onto one projection screen. Fig. 18A shows an example of projecting images of a game application program executed on the mobile phone (an image displayed on the front display) and a standby image (an image displayed on the rear display) together onto the projection screen. Fig. 18B shows an example of projecting images of player 1 of a game application program for two players executed in the mobile phone (an image displayed on the front display) and an image for player 2 (an image displayed on the rear display) together onto the external projection screen.
In this manner, by combining individual images displayed on multiple display units 119 and projecting the images onto one projection screen 200, on the same projection screen 200, multiple kinds of individual images which are different from each other and displayed on the multiple display units can be confirmed at the same time.

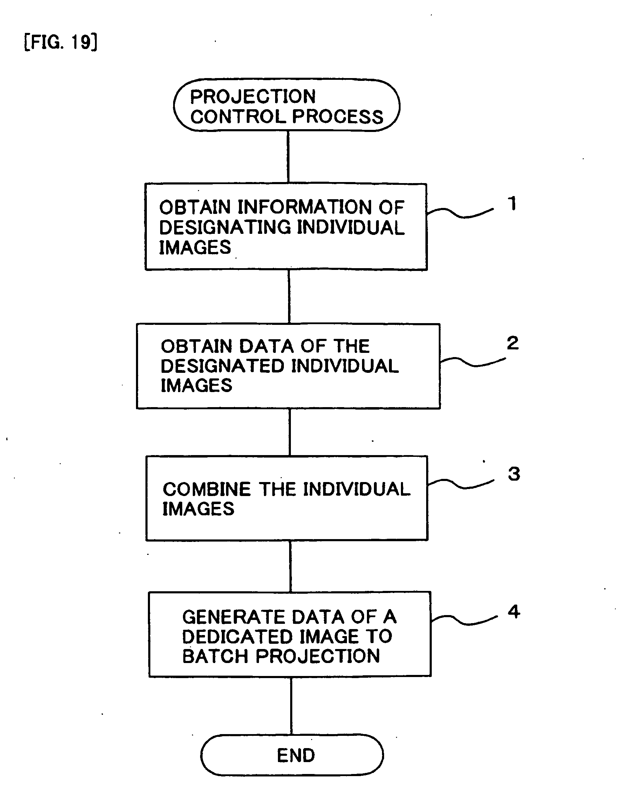

In the second embodiment, the projection control process shown in Fig. 19 may be executed and users may be allowed to designate individual images to be combined and projected onto the external projection screen 200. In this case, before obtaining data of images dedicated to projection, users designate individual images as subjects to be projected by operating the key operation unit 120 as projection image designation means. Only these designated individual images are combined and projected together onto the projection screen 200. In this case, users can designate individual images projected together onto the projection screen 200 and the images can be projected as users' desire.

In the second embodiment, as describe above, the mobile phone 100 may be configured so that application programs developed in object-oriented programming which is independent of platforms can be executed. For schematic configuration and software architecture of a mobile phone capable of executing this application program, those shown in the above-mentioned Fig. 11 and Fig 12 can be employed respectively and the description for the schematic configuration and software architecture is omitted.

### [Third Embodiment]

### Next, a third embodiment is described.

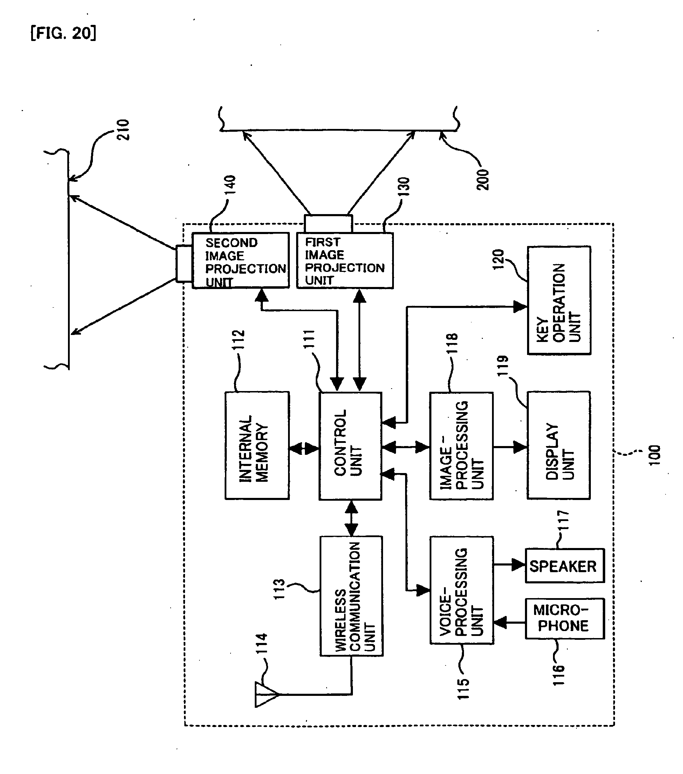

Fig. 20 is a block diagram showing an example of a schematic configuration of a mobile phone as an information communication terminal according to the third embodiment of the present invention. The mobile phone 100 of this embodiment comprises a first image projection unit 130 and a second image projection unit 140 as multiple image projection means.
For the overall configuration of a mobile phone of this embodiment and configurations of multiple image projection units 130 and 140, the overall configuration shown in Fig. 1 according to the first embodiment as described above, and configuration of image projection unit shown in Figs. 2 and 3 can be employed as well and common description will be omitted. Hereinafter, some parts of configuration and operations different from the first embodiment described above will be described.

A control unit 111 in Fig. 20 is used as control means for controlling image projection on multiple image projection units 130 and 140. An internal memory 112 is used as data memory means for memorizing data of images projected on the multiple image projection units 130 and 140. A key operation unit 120 is also used as designation means for users to designate at least one of the multiple image projection units 130 and 140. The key operation unit 120 is also used as light quantity designation means for users to designate the light quantity for the image projection units 130 and 140.

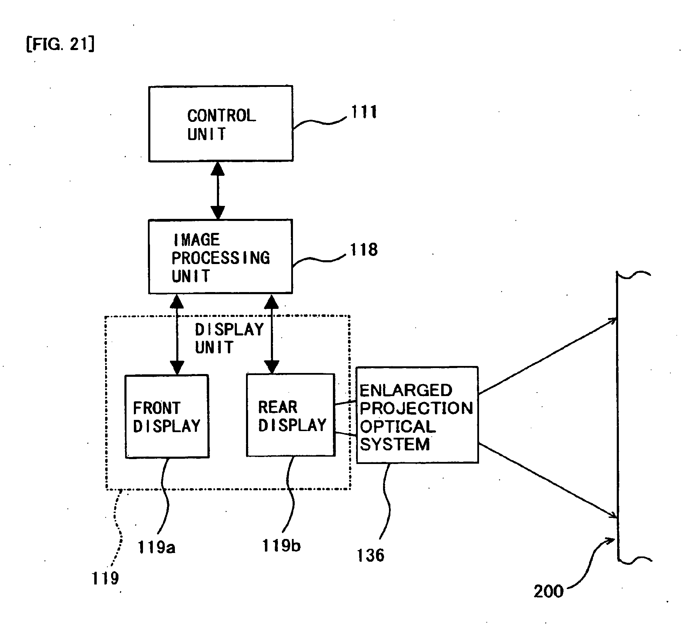

Fig. 21 is a block diagram showing an example of other configuration of the image projection unit 130. In this image projection unit 130, the rear display 119b, which is one of two displays 119a and 119b forming the display unit 119 of the mobile phone, is also used as a light source for the first image projection unit. Images displayed on this rear display 119b are projected onto the projection screen 200 by a magnifying projection optical system 136. This magnifying projection optical system 136 is formed to be removable from the mobile phone body 100. It is normally removed from the mobile phone body 100, and when being used for image projection, it can be mounted on the rear display 119b of the mobile phone body 100 by mount fixing units 136a set up on both sides.
In the case in which images on the rear display 119b are projected as shown in Fig. 21, the light quantity of the rear display 119b is preferably controlled by the control unit 111 so as to be higher than normal image display. In this case, visibility of projected images can be improved.

In the configuration in Fig. 21, the projection optical system may be used to project images displayed on the rear display 119b by flipping horizontally. In this case, when projecting an image, a mirror-reversed image is displayed on the rear display 119b by flipping a normal displaying image horizontally. Accordingly, images such as text information can be projected in the correct direction horizontally in the same way as when displaying normal images.

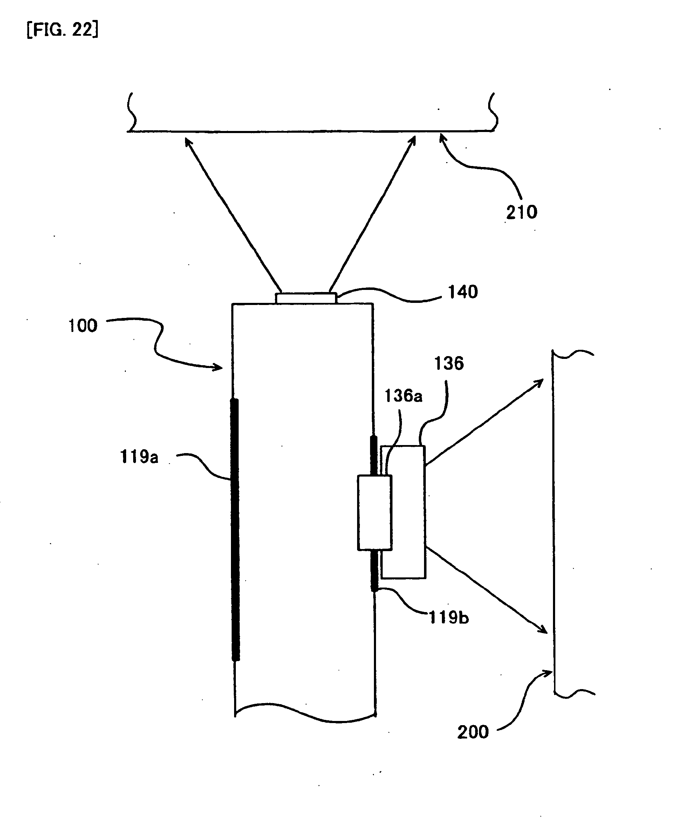

As shown in Fig. 22, when the image projection unit using the rear display 119b as a light source is set as the first image projection unit, the second image projection unit may be set at upper surface portion of the mobile phone 100 and to project an image upward.

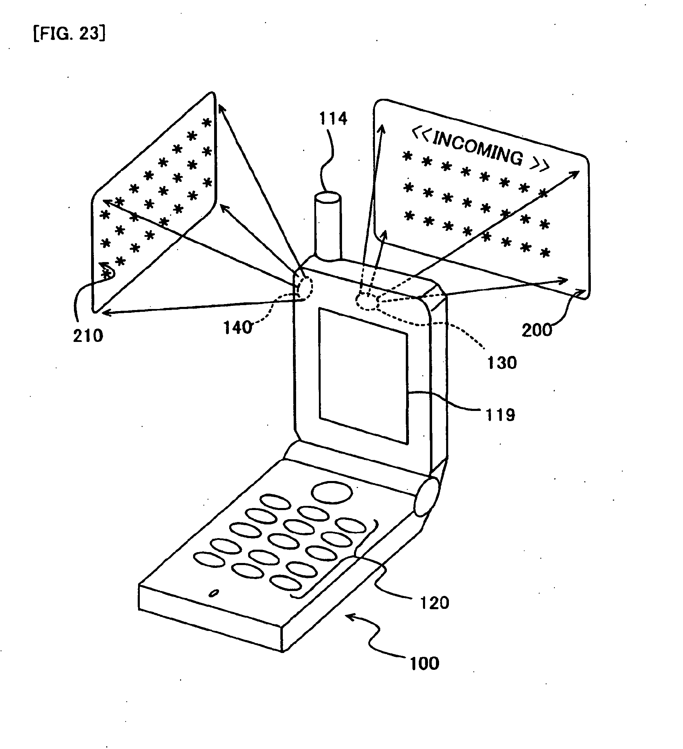

Fig. 23 is an illustrative diagram of the folding type of mobile phone 100 with the image projection units 130 and 140 projecting multiple images. This mobile phone 100 in the state of waiting is placed on a table or set in a battery charger for mobile phone so that light beam windows of the image projection units 130 and 140 are facing the desired projection screen 200 and 210, respectively. Users set either a normal image display mode for no image projection or an image projection mode for image projection by operating the key operation unit 120. Then, the mobile phone of this embodiment is configured to project each image different from each other onto the projection screen 200 and the projection screen 210 when executing the image projection mode. In the example in Fig. 23, an incoming notification image or a standby image is projected onto the first projection screen 200, and the body text of received mail or distributed information is projected as text information onto the second projection screen 210.
While projecting standby images onto the first projection screen 200, images of a game application program executed in the mobile phone may be projected onto the second projection screen 210. If the game application program uses two images, the first image may be projected onto the first projection screen 200 and the second image may be projected onto the second projection screen 200 at the same time. Furthermore, while projecting a text information image onto the first image projection screen, the above-mentioned sky image may be projected onto the entire room by the second image projection unit.

As described above, according to the third embodiment, each of the two image projection units 130 and 140 controlled by the control unit 111 can project images onto different project screens 200 and 210, respectively, and multiple images can be projected onto the two different projection screens 200 and 210 at the same time.

In the third embodiment, the multiple image projection units 130 and 140 may be configured so that users can select either unit at their own discretion to project images as well. For example, images are projected by either one of the image projection units 130 or 140, or images are projected by both image projection units 130 and 140. The image projection can be designated by the users' operation of the key operation unit 120. The control unit 111 controls the designated image projection unit to project images.

In the third embodiment, the image projection units 130 and 140, and the rear display 119b may be configured so that users can set light quantity of the image projection units at users' own discretion. For example, when the projection screen has a surface status on which a projection image is not easily recognized visually or the projection screen is in a bright environment, the light quantity is set relatively high. In contrary to this, when the projection screen has a surface status on which a projection image is easily recognized visually or the projection screen is in a dark environment, the light quantity is set relatively low. In this configuration, an appropriate light quantity can be set according to the type of projection screen, and wasteful power consumption can be reduced with maintaining the visual recognition of projection images.
The setup of light quantity for the image projection units 130 and 140 and the rear display 119b may be automatically switched to a predetermined light quantity when the control unit 111 activates the image projection unit to start image projection.

In the third embodiment, it is described about the case in which two image projection units 130 and 140 are provided. However, the present invention can be applied to the case in which more than two image projection units are provided.

In the third embodiment, it may be configured so that two projection units may be placed to be able to project in same direction and three-dimensional images can appear by an illusionary effect. In this case, the configuration can be functioned as a parallax type of three-dimensional display.

In the third embodiment, a control may be performed so that when there is no image as a subject to be projected, operation of the image projection units 130 and 140 is stopped, and when the control unit 111 receives an image projection instruction externally or determines it is time for image projection, the image projection units 130 and 140 are activated to start image projection. In this case, by stopping operation of the image projection units 130 and 140 when projecting no image, no power consumption is wasted in the image projection units 130 and 140. Therefore, wasteful power consumption by the image projection units 130 and 140 can be avoided when performing no image projection and battery consumption can be avoided in the mobile phone 100.

The foregoing image projection units using the rear display 119b as a light source as well shown in Fig. 21 in the third embodiment may be used as the image projection units 130 in the first embodiment and the second embodiment as described above.

In the third embodiment, as described above, the mobile phone 100 may be configured so that application programs developed in object-oriented programming independent of platforms can be executed. For a schematic configuration of the mobile phone capable of executing these application programs and software architecture, those shown in the foregoing Fig 11 and Fig 12 can be employed respectively and the description for the schematic configuration and software architecture is omitted.

As stated above, preferable embodiments of the present invention are described. However, various modifications can be made to the disclosed embodiments without departing from the scope of the claims.
For example, the present invention is not limited to the above-mentioned mobile phone, but also information communication terminals capable of projecting images such as PHS, automobile phones, and fixed phones as well as such as PDA with mobile phone modules attached, and similar effects can be obtained.

## Claims

1. An information communication terminal (100) comprising: image display means (119) for displaying images; image projection means (130,140) arranged to project images onto an external projection screen (200); and control means (111) for controlling the image projection means:
the information communication terminal further comprising data memory means (112) arranged to store data of dedicated images for projection which are different from images displayed by the image display means; wherein the information communication terminal comprises information receiving means for receiving information via communication networks; wherein
the control means is configured to control the image projection means to read out data of a dedicated image for projection from the data memory means when projecting images, and to project the dedicated image for projection; **characterized in that**
the control means, when information is received by the information receiving means, is configured to control the image projection means to project an incoming notification image dedicated to projection as the dedicated image for projection which can be set up independently from incoming notification images displayed by the image display means.

2. An information communication terminal according to claim 1, the information communication terminal comprising:
information receiving means (113,114) for receiving information via a communication network; and sound output means (117) for outputting sound; wherein
the control means, when information is received by the information receiving means, is configured to control the sound output means to output incoming sound for image projection, which is different from normal incoming sound when the dedicated image for projection is not projected.

3. An information communication terminal according to claim 1 or 2, wherein
the control means is configured to control the image projection means to stop operation during a standby status for receiving the information, and an image projection is started by activating the image projection means when information is received by the image receiving means.

4. An information communication terminal according to claim 1, wherein
the data memory means is arranged to memorize multiple kinds of individual image data including displayable images with the image display means and the dedicated images for projection; and
the control means is configured to control the image projection means to combine multiple individual image data which are read out selectively from the data memory means, to generate data of dedicated images for projection as subjects to be projected, and to project the dedicated images for projection as subjects to be projected onto the external projection screen (200).

5. An information communication terminal according to claim 4, wherein each of the multiple kinds of individual images is projected while being allocated to multiple individual projection areas on the external projection screen.

6. An information communication terminal according to claim 4 or 5, the information communication terminal comprising the image display means that has multiple display units; wherein
multiple kinds of individual images to be projected together onto the external projection screen are individual images which are different from each other and displayed on each display unit.

7. An information communication terminal according to claim 4, 5 or 6, the information communication terminal comprising projection image designation means for users to designate each image to be combined with the dedicated image for projection as a subject to be projected; wherein
the control means being further configured to combine the data of multiple individual images designated by the projection image designation means and generates data of a dedicated image for projection as a subject to be projected.

8. An information communication terminal according to any preceding claim, the information communication terminal comprising light quantity designation means for designating the light quantity of the image projection means; wherein the control means is configured to control the image projection means to obtain the light quantity designated by the light quantity designation means.

9. An information communication terminal according to any of claims 1 to 7, wherein the image projection means is configured with a projection optical system (136) that projects images displayed on a display unit provided in the image display means to an external projection screen (200).

10. An information communication terminal according to claim 9, wherein the projection optical system is arranged to project an image on the image section by flipping the image horizontally, and the control means is configured to control the image display means to display images on the image section by flipping the normal image display horizontally.

11. An information communication terminal according to claim 9 or 10, the information communication terminal comprising light quantity designation means for designating light quantity of the image display means; wherein
the control means is configured to control the image display means to obtain the light quantity designated by the light quantity designation means when projecting images.

12. An information communication terminal according to any preceding claim, the information communication terminal comprising application execution control means (150) for controlling an application program execution environment; wherein
the control means is configured to control to start image projection by activating the image projection means when an image projection instruction is received from the application execution control means.

## Patentansprüche

1. Informationskommunikationsendgerät (100), das Folgendes umfasst: ein Bildanzeigemittel (119) zum Anzeigen von Bildern; ein Bildprojektionsmittel (130, 140) zum Projizieren von Bildern auf einen externen Projektionsschirm (200); und ein Steuermittel (111) zum Steuern des Bildprojektionsmittels:
wobei das Informationskommunikationsendgerät ferner ein Datenspeichermittel (112) zum Speichern von Daten von zur Projektion dedizierten Bildern umfasst, die sich von von dem Bildanzeigemittel angezeigten Bildern unterscheiden; wobei das Informationskommunikationsendgerät Informationsempfangsmittel zum Empfangen von Informationen über Kommunikationsnetze umfasst; wobei
das Steuermittel zum Steuern des Bildprojektionsmittels so konfiguriert ist, dass es Daten eines zur Projektion dedizierten Bildes vom Datenspeichermittel beim Projizieren von Bildern liest und das zur Projektion dedizierte Bild projiziert;
**dadurch gekennzeichnet, dass**
das Steuermittel, wenn Informationen vom Informationsempfangsmittel empfangen werden, zum Steuern des Bildprojektionsmittels konfiguriert ist, um ein zur Projektion dediziertes eingehendes Benachrichtigungsbild als das zur Projektion dedizierte Bild zu projizieren, was unabhängig von vom Bildanzeigemittel angezeigten eingehenden Benachrichtigungsbildern eingerichtet werden kann.

2. Informationskommunikationsendgerät nach Anspruch 1, wobei das Informationskommunikationsendgerät ein Informationsempfangsmittel (113, 114) zum Empfangen von Informationen über ein Kommunikationsnetz und ein Tonausgabemittel (117) zum Ausgeben von Ton umfasst; wobei
das Steuermittel, wenn Informationen vom Informationsempfangsmittel empfangen werden, zum Steuern des Tonausgabemittels konfiguriert ist, um eingehenden Ton zur Bildprojektion auszugeben, der sich von normalem eingehendem Ton unterscheidet, wenn das zur Projektion dedizierte Bild nicht projiziert wird.

3. Informationskommunikationsendgerät nach Anspruch 1 oder 2, wobei
das Steuermittel zum Steuern des Bildprojektionsmittels zum Stoppen des Betriebs während eines Standby-Status zum Empfangen der Informationen konfiguriert ist, und eine Bildprojektion durch Aktivieren des Bildprojektionsmittels gestartet wird, wenn Informationen vom Bildempfangsmittel empfangen werden.

4. Informationskommunikationsendgerät nach Anspruch 1, wobei
das Datenspeichermittel zum Speichern mehrerer Arten von individuellen Bilddaten einschließlich mit dem Bildanzeigemittel anzeigefähiger Bilder und der zur Projektion dedizierten Bilder ausgelegt ist; und
das Steuermittel zum Steuern des Bildprojektionsmittels zum Kombinieren mehrerer selektiv aus dem Datenspeichermittel gelesener individueller Bilddaten, zum Erzeugen von Daten von zur Projektion dedizierten Bildern als zu projizierende Objekte und zum Projizieren der zur Projektion dedizierten Bilder als auf den externen Projektionsschirm (200) zu projizierende Objekte konfiguriert ist.

5. Informationskommunikationsendgerät nach Anspruch 4, wobei jedes der mehreren Arten von individuellen Bildern projiziert wird, während es mehreren individuellen Projektionsbereichen auf dem externen Projektionsschirm zugeordnet wird.

6. Informationskommunikationsendgerät nach Anspruch 4 oder 5, wobei das Informationskommunikationsendgerät das Bildanzeigemittel umfasst, das mehrere Anzeigeeinheiten hat; wobei
mehrere Arten von zusammen auf den externen Projektionsschirm zu projizierenden individuellen Bildern individuelle Bilder sind, die sich voneinander unterscheiden und die auf jeder Anzeigeeinheit angezeigt werden.

7. Informationskommunikationsendgerät nach Anspruch 4, 5 oder 6, wobei das Informationskommunikationsendgerät Projektionsbildbestimmungsmittel umfasst, damit Benutzer jedes mit dem zur Projektion dedizierte Bild als ein zu projizierendes Objekt zu kombinierendes Bild bestimmen können; wobei
das Steuermittel ferner zum Kombinieren der Daten mehrerer von dem Projektionsbildbestimmungsmittel bestimmter individueller Bilder konfiguriert ist und Daten eines zur Projektion dedizierten Bildes als ein zu projizierendes Objekt erzeugt.

8. Informationskommunikationsendgerät nach einem der vorherigen Ansprüche, wobei das Informationskommunikationsendgerät Lichtmengenbestimmungsmittel zum Bestimmen der Lichtmenge des Bildprojektionsmittels umfasst; wobei das Steuermittel zum Steuern des Bildprojektionsmittels konfiguriert ist, um die von dem Lichtmengenbestimmungsmittel bestimmte Lichtmenge zu erhalten.

9. Informationskommunikationsendgerät nach einem der Ansprüche 1 bis 7, wobei das Bildprojektionsmittel mit einem Projektionsoptiksystem (136) konfiguriert ist, das Bilder, die auf einer in dem Bildanzeigemittel vorgesehenen Anzeigeeinheit angezeigt werden, auf einen externen Projektionsschirm (200) projiziert.

10. Informationskommunikationsendgerät nach Anspruch 9, wobei das Projektionsoptiksystem die Aufgabe hat, ein Bild durch horizontales Umdrehen des Bildes auf den Bildteil zu projizieren, und das Steuermittel zum Steuern des Bildanzeigemittels konfiguriert ist, so dass es Bilder auf dem Bildteil durch horizontales Umdrehen der normalen Bildanzeige anzeigt.

11. Informationskommunikationsendgerät nach Anspruch 9 oder 10, wobei das Informationskommunikationsendgerät Lichtmengenbestimmungsmittel zum Bestimmen der Lichtmenge des Bildanzeigemittels umfasst; wobei das Steuermittel zum Steuern des Bildanzeigemittels konfiguriert ist, um die von dem Lichtmengenbestimmungsmittel bestimmte Lichtmenge beim Projizieren von Bildern zu erhalten.

12. Informationskommunikationsendgerät nach einem der vorherigen Ansprüche, wobei das Informationskommunikationsendgerät Anwendungsausführungssteuermittel (150) zum Steuern einer Anwendungsprogrammausführungsumgebung umfasst; wobei
das Steuermittel so konfiguriert ist, dass es den Start der Bildprojektion durch Aktivieren des Bildprojektionsmittels steuert, wenn ein Bildprojektionsbefehl vom Anwendungsausführungssteuermittel empfangen wird.

## Revendications

1. Terminal de communication d'informations (100) comprenant : des moyens d'affichage d'images (119) pour présenter des images ; des moyens de projection d'images (130, 140) agencés pour projeter des images sur un écran de projection externe (200) ; et des moyens de commande (111) pour piloter les moyens de projection d'images :
le terminal de communication d'informations comportant en outre des moyens de mémoire de données (112) agencés pour stocker les données d'images dédiées destinées à être projetées lesquelles sont différentes des images présentées par les moyens d'affichage d'images ; cas dans lequel
le terminal de communication d'informations comporte des moyens de réception d'informations pour recevoir des informations par l'intermédiaire de réseaux de communication ; cas dans lequel
les moyens de commande sont configurés pour piloter les moyens de projection d'images afin d'assurer la lecture des données d'une image dédiée destinée à être projetée à partir des moyens de mémoire de données au moment de la projection d'images, et pour projeter l'image dédiée destinée à être projetée ; **caractérisé en ce que**
lorsque des informations sont reçues par les moyens de réception d'informations, les moyens de commande sont configurés pour piloter les moyens de projection d'images afin de projeter une image de notification arrivante dédiée à la projection sous la forme de l'image dédiée destinée à être projetée laquelle peut être paramétrée indépendamment des images de notification arrivantes présentées par les moyens d'affichage d'images.

2. Terminal de communication d'informations selon la revendication 1, le terminal de communication d'informations comprenant : des moyens de réception d'informations (113, 114) pour recevoir des informations par l'intermédiaire d'un réseau de communication ; et des moyens de sortie de sons (117) pour produire un son ; cas dans lequel
lorsque des informations sont reçues par les moyens de réception d'informations, les moyens de commande sont configurés pour piloter les moyens de sortie de sons afin de produire le son arrivant pour la projection d'images, lequel est différent du son arrivant normal lorsque l'image dédiée destinée à être projetée n'est pas projetée.

3. Terminal de communication d'informations selon la revendication 1 ou 2,
les moyens de commande étant configurés pour piloter les moyens de projection d'images afin d'arrêter le fonctionnement pendant l'état de veille pour recevoir les informations, et une projection d'images étant amorcée grâce à l'activation des moyens de projection d'images lorsque des informations sont reçues par les moyens de réception d'images.

4. Terminal de communication d'informations selon la revendication 1,
les moyens de mémoire de données étant agencés pour mémoriser de multiples types de données d'images individuelles, englobant des images affichables à l'aide des moyens d'affichage d'images et les images dédiées destinées à être projetées ; et
les moyens de commande étant configurés pour piloter les moyens de projection d'images afin de combiner des données de multiples images individuelles qui sont lues sélectivement à partir des moyens de mémoire de données, pour générer des données d'images dédiées destinées à être projetées sous la forme de sujets devant être projetés, et pour projeter les images dédiées destinées à être projetées sous la forme de sujets devant être projetés sur l'écran de projection externe (200).

5. Terminal de communication d'informations selon la revendication 4, chacun des multiples types d'images individuelles étant projeté tout en étant affecté à de multiples zones de projection individuelles sur l'écran de projection externe.

6. Terminal de communication d'informations selon la revendication 4 ou 5, le terminal de communication d'informations comprenant les moyens d'affichage d'images qui possèdent de multiples unités d'affichage ; cas dans lequel
de multiples types d'images individuelles, devant être projetées ensemble sur l'écran de projection externe, sont des images individuelles lesquelles sont différentes les unes des autres et sont présentées sur chaque unité d'affichage.

7. Terminal de communication d'informations selon la revendication 4, 5 ou 6, le terminal de communication d'informations comprenant des moyens de désignation d'images de projection pour permettre aux utilisateurs de désigner chaque image devant être combinée avec l'image dédiée destinée à être projetée sous la forme d'un sujet devant être projeté ; cas dans lequel
les moyens de commande sont configurés en outre pour combiner les données de multiples images individuelles désignées par les moyens de désignation d'images de projection et pour générer les données d'une image dédiée destinée à être projetée sous la forme d'un sujet devant être projeté.

8. Terminal de communication d'informations selon l'une quelconque des revendications précédentes, le terminal de communication d'informations comprenant des moyens de désignation de quantité de lumière pour désigner la quantité de lumière des moyens de projection d'images ; cas dans lequel
les moyens de commande sont configurés pour piloter les moyens de projection d'images afin d'obtenir la quantité de lumière ayant été désignée par les moyens de désignation de quantité de lumière.

9. Terminal de communication d'informations selon l'une quelconque des revendications 1 à 7, les moyens de projection d'images étant configurés en conjonction avec un système de projection optique (136) lequel projette des images présentées sur une unité d'affichage montée dans les moyens d'affichage d'images sur un écran de projection externe (200).

10. Terminal de communication d'informations selon la revendication 9, le système de projection optique étant agencé pour projeter une image sur la section des images en faisant basculer l'image horizontalement, et lesdits moyens de commande étant configurés pour piloter les moyens d'affichage d'images pour présenter des images sur la section des images en faisant basculer horizontalement l'affichage d'images normal.

11. Terminal de communication d'informations selon la revendication 9 ou 10, le terminal de communication d'informations comprenant des moyens de désignation de quantité de lumière pour désigner la quantité de lumière des moyens d'affichage d' images ; cas dans lequel
les moyens de commande sont configurés pour piloter les moyens d'affichage d'images afin d'obtenir la quantité de lumière ayant été désignée par les moyens de désignation de quantité de lumière au moment de la projection d'images.

12. Terminal de communication d'informations selon l'une quelconque des revendications précédentes, le terminal de communication d'informations comprenant des moyens de commande d'exécution d'applications (150) pour piloter un environnement d'exécution du programme des applications ; cas dans lequel
les moyens de commande sont configurés pour piloter le démarrage de la projection d'images grâce à l'activation des moyens de projection d'images lorsqu'une instruction de projection d'images est reçue en provenance des moyens de commande d'exécution d'applications.
